# EUROPEAN PATENT SPECIFICATION

(11) **EP 4 377 558 B1**
(45) Date of publication and mention of the grant of the patent: **22.10.2025**
(21) Application number: 22751763.8
(22) Date of filing: 28.07.2022
(51) Int. Cl.: F01K 13/02, F01K 17/02, F01K 23/10, F24D 3/00, F24D 9/00, F24D 101/10, F24D 101/40

(54) **INSTALLATION FOR PRODUCING ELECTRICITY AND HEAT, COMPRISING A GAS TURBINE UNIT**
ANLAGE ZUM ERZEUGEN VON ELEKTRIZITÄT UND WÄRME, MIT EINER GASTURBINENEINHEIT
INSTALLATION DE PRODUCTION D'ÉLECTRICITÉ ET DE CHALEUR, COMPRENANT UNE UNITÉ DE TURBINE À GAZ

(30) Priority: 29.07.2021 EP 21306057
(43) Date of publication of application: 05.06.2024
(73) Proprietor: TotalEnergies OneTech, 92400 Courbevoie (FR)
(72) Inventor: SERVAIS, Florian, 78800 HOUILLES (FR); RODRIGUEZ, Marcos, 94100 SAINT MAUR DES FOSSES (FR); LEVITT, David, 64320 BIZANOS (FR); DELAHAYE, Bruno, 91520 EGLY (FR)
(74) Representative: Lavoix
(86) International application number: PCT/EP2022/071189
(87) International publication number: WO 2023/006873

(56) References cited:
- US-A1- 2005 279 095
- US-A1- 2018 245 485
- PRASANNA U R ET AL: "Fuel cell based hybrid power generation strategies for microgrid applications", 2015 IEEE INDUSTRY APPLICATIONS SOCIETY ANNUAL MEETING, IEEE, 18 October 2015 (2015-10-18), pages 1 - 7, XP032830165, DOI: 10.1109/IAS.2015.7356785
- CHEN YABIN: "Optimal Configuration and Sensitivity Analysis of Distributed Generations in a Grid-connected Micro-grid", 2018 INTERNATIONAL CONFERENCE ON POWER SYSTEM TECHNOLOGY (POWERCON), IEEE, 6 November 2018 (2018-11-06), pages 881 - 888, XP033492255, DOI: 10.1109/POWERCON.2018.8602081
- COLIN F. MCDONALD: "A hybrid solar closed-cycle gas turbine combined heat and power plant concept to meet the continuous total energy needs of a small community", JOURNAL OF HEAT RECOVERY SYSTEMS, vol. 6, no. 5, 1 January 1986 (1986-01-01), pages 399 - 419, XP055101582, ISSN: 0198-7593, DOI: 10.1016/0198-7593(86)90227-4
- CAMERETTI M C ET AL: "Combined MGT - ORC Solar - Hybrid System. PART A: Plant Optimization", ENERGY PROCEDIA, ELSEVIER, NL, vol. 81, 18 December 2015 (2015-12-18), pages 368 - 378, XP029364492, ISSN: 1876-6102, DOI: 10.1016/J.EGYPRO.2015.12.106
- POPOV DIMITYR ED - CORONAS ALBERTO ET AL: "Innovative solar augmentation of gas turbine combined cycle plants", APPLIED THERMAL ENGINEERING, PERGAMON, OXFORD, GB, vol. 64, no. 1, 12 December 2013 (2013-12-12), pages 40 - 50, XP028667332, ISSN: 1359-4311, DOI: 10.1016/J.APPLTHERMALENG.2013.12.002

## Description

The present invention deals with an installation for producing electricity and heat, the installation comprising a gas turbine unit, for example a CCGT (Combined Cycle Gas Turbine), able to produce said electricity and heat.

The invention also deals with a corresponding process for producing electricity and heat.

Such an installation performs well in terms of electricity and heat production, particularly for internal or local users, but also for external users, such as district heating and local, regional or national electricity grids.

However, such an installation consumes fuel, for example natural gas, and produces exhausts containing CO2 as well as some pollutants. There are techniques for capturing and sequestrating fatal CO2, and for filtering pollutants, but they are complex, and are rather costly. There is a growing need for reducing CO2 emissions and fuel consumption, the latter naturally contributing to the former.

Integration of a photovoltaic unit in industrial installation is known for both reducing fuel conception and CO2 emissions for electricity generation, as well as capital expenditures. Using a photovoltaic unit may allow a significant reduction of the gas turbine average load, or even a reduction of the number of gas turbines installed.

However, this also reduces the amount of recoverable waste heat, and results in a heat production reduction. In order to avoid a heat shortage, additional combustion of hydrocarbon fuel is performed, by firing additional boilers or using post-firing so as to meet the heat needs. This of course increases CO2 emissions and fuel consumption again, and reduces the benefits of the photovoltaic unit. Documents US2005/279095 and US2018/245485 disclose heat and electricity producing installations comprising a gas turbine, a photovoltaic cell and/or a solar thermal unit as known in the art.

An aim of the invention is to solve or improve the above issues, in particular to provide an installation for producing electricity and heat comprising a gas turbine unit, with reduced CO2 emissions on average.

To this end, the invention proposes an installation according to claim 1.

In other embodiments, the installation comprises one or several of the features corresponding to claims 2 to 12, taken in isolation or any technically feasible combination.

The invention also deals with a process according to claim 13.

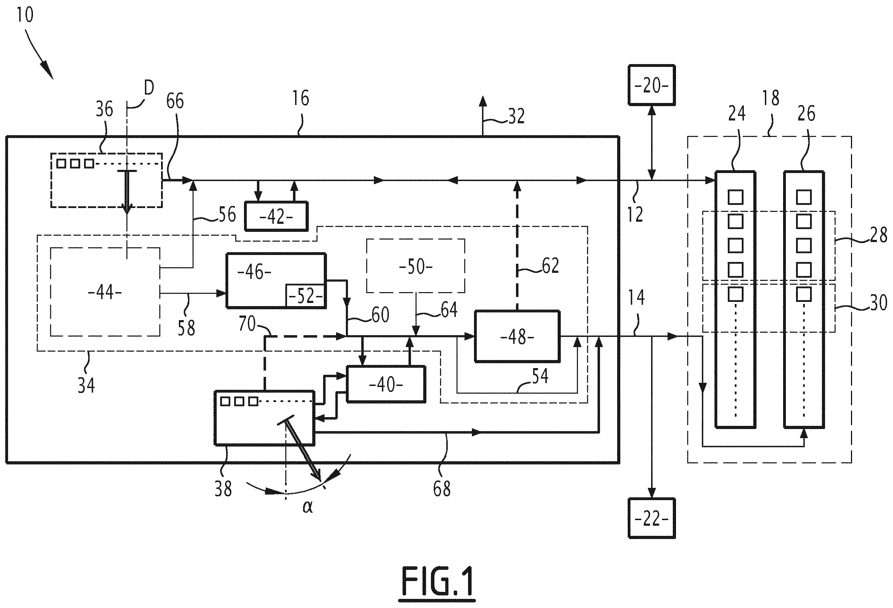

The invention and its advantages will be better understood upon reading the following description, given solely by way of example and with reference to the appended drawings, in which Figure 1 is a schematic block diagram of an installation according to the invention.

An installation 10 according to the invention will now be described with reference to Figure 1.

The installation 10 is adapted for producing electricity 12 and heat 14.

In the example, the installation 10 comprises a production facility 16 adapted for producing said electricity 12 and heat 14, and local users 18 of said electricity and heat. The installation 10 is advantageously adapted for exporting at least part of the electricity 12 to a local, regional or national grid 20. The installation 10 is also advantageously adapted for delivering at least part of the heat 14 to one or several external users 22, such as a district heating system.

The installation 10 is for example also adapted to receive electricity from said local, regional or national grid 20.

The split between the production facility 16 and the users 18 in the installation 10 is somewhat "artificial" here, as some of the users 18 could be considered as part of the production facility 16 itself. In other words, at least some of the local users 18 are internal users of the production facility.

The users 18 advantageously comprise one or several electricity user(s) 24 and one or several heat user(s) 26.

For example, said one or several heat user(s) 26 comprise(s) one or several users among:
- a crude storage tank heating unit,
- a flare drums heating unit,
- a closed drain and open drain drums heating unit,
- a fire water storage tank, demineralization water storage tank, potable water storage tank,
- a steam tracing unit,
- export crude oil heaters,
- an amine regenerator,
- an LPG fractionation and condensate stabilization unit,
- a gas dehydration unit,
- a produced water treatment unit,
- an oil separation interstage heating unit, and
- an electrostatic coalescer heater for oil and water separation.

For example, said one or several electricity user(s) 24 comprise(s) one or several users among:
- pumps,
- compressors,
- refrigeration or cooling units,
- heat pumps, and
- lighting members.

Advantageously, some of said one or several heat user(s) 26 and some of said one or several electricity user(s) 24 altogether form a carbon capture, utilization and sequestration unit 28, and an enhanced oil recovery unit 30 of the installation 10.

Said carbon capture, utilization and sequestration unit 28 and enhanced oil recovery unit 30 are adapted for receiving at least part of said heat 14 and at least part of said electricity 12 as utilities. Said carbon capture, utilization and sequestration unit 28 and enhanced oil recovery unit 30 are for example designed for receiving exhausts and low temperature gas produced by the production facility 16 and symbolized by an exit flux 32 in Figure 1, and sending them into subterranean reservoirs (not represented).

The production facility 16 comprises a gas turbine unit 34, a photovoltaic unit 36 and a solar thermal unit 38.

Advantageously, the production facility 16 further comprises a thermal storage unit 40 adapted for selectively receiving heat from or providing heat to the gas turbine unit 34, and for selectively receiving heat from and providing heat to the solar thermal unit 38. Advantageously, the production facility 16 also comprises an electricity storage unit 42, for example comprising batteries (not represented), and adapted for selectively storing electricity from the gas turbine unit 34 and from the photovoltaic unit 36.

The production facility 16 is configured for switching at least between a first operation mode, in which said electricity 12 and said heat 14 are only produced by the gas turbine unit 34, a second operation mode in which said electricity 12 and said heat 14 are produced by the gas turbine unit 34, the photovoltaic unit 36 and the solar thermal unit 38, and a third operation mode, in which said electricity 12 and said heat 14 are only produced by the photovoltaic unit 36 and the solar thermal unit 38.

The production facility 16 may also include an electrical heater (not represented) in order to convert electricity into heat, so as to gain flexibility.

The thermal storage 40 and/or the electricity storage unit 42 are advantageously used to manage intermittency or for peak shifting supply, or for optimizing the efficiency of the electricity and heat supply from the gas turbine unit 34.The thermal storage unit 40 may comprise one or several of the following elements (not represented):
- a water reservoir at atmospheric pressure and a temperature below 100°C, or under pressure and at a temperature above 100°C,
- a concentration system using water and steam for example at 250°C,
- hot oil, for example at 393°C,
- molten salts, for example up to 568°C.

The gas turbine unit 34 for example comprises a gas turbine 44, a heat recovery steam generator 46 (HRSG), and a steam turbine 48. Advantageously, the gas turbine unit 34 further comprises a boiler 50, and a post firing system 52 within the heat recovery steam generator 46.

As a variant, the gas turbine unit 34 may comprise several gas turbines and/or several steam turbines.

The steam turbine 48 may further comprise a bypass system 54.

The photovoltaic unit 36 comprises photovoltaic modules, inverters... (all these elements are just symbolized in Figure 1). Photovoltaics modules may include different technologies, for example crystalline silicon modules with full cells or half-cut cells, or Shingled cells modules. These modules may be mono-facial or bi-facial, possibly using low concentration system.

For example, the photovoltaic modules define a general direction D, advantageously a north-south line. For example, the photovoltaic modules points at the south if the installation is located in the northern hemisphere.

The solar thermal unit 38 comprises solar collectors, piping for distribution and collection of a fluid to collect the heat, heat exchangers, pumps, and support for the solar collectors (all these elements are just symbolized in Figure 1).

The solar thermal unit 38 for example comprises parabolic troughs collectors, flat panel collectors, evacuated tube collectors, high-vacuum flat panel collectors, and/or linear Fresnel collectors, and/or a solar tower collection system (symbolized in Figure 1).

The solar thermal unit 38 may include various types of solar collectors depending on the temperature(s) at which the heat users 26 need the heat 14.

For example, the solar collectors of the solar thermal unit 38 define a general direction which defines an angle α with the general direction D defined by the photovoltaic modules, the solar collectors being oriented on the east side from the general direction D. Advantageously, the angle α is comprised between 1° and 90°, for example between 5° and 45°.

This advantageously allows the solar thermal unit 38 to warm-up before switching from the first operation mode to the second or third operation modes in order to allow heat production to occur synchronously with the photovoltaic unit output despite the former's inherent latency.

The operation of the installation 10 will now be described, which also illustrates a process according to the invention.

The installation 10 produces said electricity 12 for the users 18 and advantageously the grid 20, or may sometimes receive electricity from said grid. The installation 10 also produces said heat 14 for the users 18, and advantageously for the external users 22.

In the example, among the users 18, the carbon capture, utilization and sequestration unit 28 and the enhanced oil recovery unit receive part of said heat 14 and part of said electricity 12.

Depending in particular on weather conditions, especially the amount of sun, the installation is switched between at least the first, the second and the third operational modes.

In the first operation mode, the gas turbine unit 34 produces all of said electricity 12 and heat 14. The photovoltaic unit 36 and the solar thermal unit 38 are off.

The first mode is typically used when the photovoltaic unit 36 and the solar thermal unit 38 are not available or not able to run, for example at night, or if there is not enough sun.

The gas turbine 44 produces a first portion 46 of said electricity 12, and exhaust gases 58. The heat recovery steam generator 46 receives said exhaust gases 58 and produces steam 60. Additionally or alternatively, a waste heat recovery unit may recover heat employing a liquid-phase heat transfer fluid such as water or oil. If needed, the post firing system 52 allows increasing the amount of said steam 60.

The steam turbine 48 receives at least said steam 60 produced by the heat recovery steam generator 46, and produces a second portion 62 of said electricity 12, and said heat 14. If needed, the boiler 50 produces additional steam 64, the steam turbine 48 receiving said additional steam.

If needed, the bypass system 54 allows said steam 60 produced by the heat recovery steam generator 46 to bypass the steam turbine 48. The by-passed steam is for example sent to the steam users 26. Alternatively or additionally, a waste heat recovery unit may supply heat to the heat users 26.

In order to provide flexibility, the thermal storage unit 40 may receive heat from or provide heat to the gas turbine unit 34. Similarly, the electricity storage unit 42 selectively stores electricity from the gas turbine unit or releases electricity as part of said electricity 12.

Only the differences between the second mode and the first mode will now be described.

In the second operation mode, the gas turbine unit 34 produces only part of said electricity 12 and the photovoltaic unit 36 produces a rest 66 of said electricity. Said electricity 12 is a sum of the first portion 56, the second portion 62 and said rest 66.

The gas turbine unit 34 produces part of said heat 14 and the solar thermal unit 38 produces a rest 68 of said heat 14. Said rest 68 is for example low pressure steam added to steam coming from the steam turbine 48.

As a variant, waste heat from the gas turbine 44 is processed by a waste heat recovery unit, and heat from the solar thermal unit 38 is provided as sensible heat in a liquid-phase heat transfer fluid (not represented).

The second mode is typically used when the photovoltaic unit 36 and the solar thermal unit 38 are not able to provide all the electricity 12 and heat 14, for example because the requested amounts are large, and/or there is not enough sun.

As a variant, the gas turbine unit 34 produces all of said heat 14, and the solar thermal unit 38 provides heat 70 to the gas turbine unit 34. Said heat 70 is for example steam processed by the steam turbine 48.

In order to provide flexibility, the thermal storage unit 40 may receive heat from or provide heat to the solar thermal unit 38. Similarly, the electricity storage unit 42 selectively stores electricity from the photovoltaic unit 36 or releases electricity as part of said electricity 12.

The third mode will now be described.

The third mode is typically used when the photovoltaic unit 36 and the solar thermal unit 38 are able, directly or indirectly, to provide all the electricity 12 and heat 14 requested by the users 18 taking into account the grid 20, for example because the requested amounts are small, and/or there is a lot of sun.

The whole gas turbine unit 34 may be off. The photovoltaic unit 36 produces all of said electricity 12. Advantageously, the grid 20 may provide additional electricity to the installation 10, or receive electricity from it.

The solar thermal unit 38 produces all of said heat 14, for example hot water or low pressure steam.

As a variant, the steam turbine 48 is not off and processes steam coming from the solar thermal unit 38. Said heat 14 may come partly or entirely from the steam turbine 48. Preferably, all fossil fuel consuming elements of the gas turbine unit 34 are off.

In this mode, the thermal storage unit 40 may also receive heat from or provide heat to the solar thermal unit 38, and the electricity storage unit 42 may store electricity from the photovoltaic unit 36 or release electricity.

Thanks to the above features, the installation 10 can produce the electricity 12 and the heat 14, either using the gas turbine unit 34 in the first operation mode, or using the gas turbine unit 34, the photovoltaic unit 36 and the solar thermal unit 38 in the second operation mode, or only the photovoltaic unit 36 and the solar thermal unit 38 in the third operation mode.

In the second operation mode, the load of the gas turbine 44 is reduced and the amount of exhaust gases 58 is reduced. However, this does not create a lack of heat for the users 18, or the lack of heat is smaller, thanks to the heat provided by the solar thermal unit 38. So there is no need, or a smaller need, for firing the additional boiler 50 or the post firing 52. As a result, less CO2 is released by the installation 10.

In the third operation mode, there are no exhaust gases 58 at all. However, this does not create a lack of heat for the users 18, or the lack of heat is smaller, thanks to the heat provided by the solar thermal unit 38. So there is no need, or a smaller need, for firing the additional boiler 50. As a result, less CO2 is emitted. The production capacities of the photovoltaic unit 36 and the solar thermal unit 38 are for example adjusted according to the needs of the local users 18, and advantageously to a CO2 emission reduction target.

By definition, the potential lack of heat, due to running the photovoltaic unit 36 and having to reduce or shut down the gas turbine 44, occurs when there is sun. Also by definition, the solar thermal unit 18 is able to produce heat when there is sun. There is a true synergy between these two units, the latter being able to compensate the lack of heat entailed by the former, leading to reduced amounts of CO2 production.

Thanks to the optional thermal storage unit 40 and electricity storage unit 42, the installation 10 also provides a time flexibility, allowing electricity and heat production not to be strictly equal to actual requested levels.

### Example

In the following chart, we compare the performance of the installation 10 (case 3, with a photovoltaic unit nominal power of 100 MW and a solar thermal unit nominal power of 42 MW), with a similar installation without the solar thermal unit 38 (case 2), and with a similar installation without the solar thermal unit 38 and without the photovoltaic unit 36 (case 1):

| Case | Photovoltaic unit nominal power | Solar thermal unit nominal power | Footprint required | CO2 emissions | CO2 abatement efficiency |
|---|---|---|---|---|---|
| **1.** Gas turbine unit 34 only (comparative example) | 0 | 0 | 0 | X | N/A |
| **2.** Gas turbine unit 34 + Photovoltaic unit 36 (comparative example) | 100 MW | 0 | 150 ha | X - 85.0 kt/y | 0.57 kt/yr/ha |
| **3.** Gas turbine unit 34 + Photovoltaic unit 36 + Solar thermal unit 38 (Invention) | 100 MW | 45 MW | 166 ha | X - 101.6 kt/y | 0.61 kt/yr/ha |

It appears that case 2 allows reducing CO2 emissions by 85.0 kt/y (kilotons per year) thanks to the photovoltaic unit 36 requesting 150 ha (hectare). However, case 3 allows reducing CO2 emissions by 101.6 kt/y, thanks to a solar thermal unit requesting 166 ha in the example. Relative to the footprint, case 3 allows a reduction of 0.61 kt/yr/ha (kilotons per year per hectare), while case 2 only allows 0.57 kt/yr/ha. In this example, the invention (case 3) not only reduces CO2 emissions in absolute terms, but also relative to the surface that is needed.

## Claims

1. An installation (10) for producing electricity (12) and heat (14), the installation (10) comprising a gas turbine unit (34), a photovoltaic unit (36) and a solar thermal unit (38), the installation (10) being configured for switching at least between:
- a first operation mode, in which the gas turbine unit (34) produces said electricity (12) and said heat (14),
- a second operation mode, in which the gas turbine unit (34) produces only part of said electricity (12) and the photovoltaic unit (36) produces a rest (68) of said electricity (12), and in which the gas turbine unit (34) produces at least part of said heat (14) and the solar thermal unit (38) either produces a rest (68) of said heat (14) or provides heat (70) to the gas turbine unit (34), and
- a third operation mode, in which said electricity (12) and said heat (14) are produced by the photovoltaic unit (36) and the solar thermal unit (38), or by the photovoltaic unit (36), the solar thermal unit (38) and one or several steam turbines (48) of the gas turbine unit (34).

2. The installation (10) according to claim 1, further comprising a thermal storage unit (40) adapted for selectively receiving heat (14) from or providing heat (14) to the gas turbine unit (34), and for selectively receiving heat (14) from and providing heat (14) to the solar thermal unit (38).

3. The installation (10) according to claim 1 or 2, further comprising an electricity storage unit (42) adapted for selectively storing electricity (12) from the gas turbine unit (34) and the photovoltaic unit.

4. The installation (10) according to any one of claims 1 to 3, wherein the gas turbine unit (34) comprises:
- a gas turbine (44) for producing: a first portion (56) of said electricity (12) in the first operation mode or a first portion (56) of said part of said electricity (12) in the second operation mode; and exhaust gases (58);
- a heat recovery steam generator (46) adapted for receiving said exhaust gases (58) and producing steam (60); and
- one or several steam turbines (48) adapted for receiving at least said steam (60) produced by the heat recovery steam generator (46), and for producing: a second portion (62) of said electricity (12), and said heat (14) in the first operation mode; or for producing a second portion (62) of said part of said electricity (12), and at least part of said heat (14) in the second operation mode.

5. The installation (10) according to claim 4, wherein, in the second operation mode:
- said heat (70) provided to the gas turbine unit (34) by the solar thermal unit (38) comprises steam received by said one or several steam turbines (48), or
- said rest (68) produced by the solar thermal unit (38) comprises steam.

6. The installation (10) according to claim 4 or 5, wherein the gas turbine unit (34) further comprises:
- a boiler (50) adapted for producing additional steam (64), said one or several steam turbines (48) being adapted for receiving said additional steam (64), and/or
- a post firing system (52) within the heat recovery steam generator (46), the post firing system (52) being adapted to selectively increase the amount of said steam (60) produced by the heat recovery steam generator (46).

7. The installation (10) according to any of claims 4 to 6, wherein the gas turbine unit (34) further comprises a bypass system (54) adapted for allowing said steam (60) produced by the heat recovery steam generator (46) to bypass said one or several steam turbines (48).

8. The installation (10) according to any one of claims 1 to 7, further comprising one or several heat user(s) (26) among:
- a crude storage tank heating unit,
- a flare drums heating unit,
- a closed drain and open drain drums heating unit,
- a fire water storage tank, demineralization water storage tank, potable water storage tank,
- a steam tracing unit,
- export crude oil heaters,
- an amine regenerator,
- an LPG fractionation and condensate stabilization unit,
- a gas dehydration unit,
- a produced water treatment unit,
- an oil separation interstage heating unit, and
- an electrostatic coalescer heater for oil and water separation,
said one or several heat (14) user(s) being adapted for receiving at least part of said heat (14).

9. The installation (10) according to claim 7, further comprising one or several electricity user(s) (24) among:
- pumps,
- compressors,
- refrigeration or cooling units,
- heat pumps, and
- lighting members,
said one or several electricity (12) user(s) being adapted for receiving at least part of said electricity (12).

10. The installation (10) according to any one of claims 1 to 9, comprising a carbon capture, utilization and sequestration unit (28), or an enhanced oil recovery unit (30), said carbon capture, utilization and sequestration unit (28) or enhanced oil recovery unit (30) being adapted for receiving at least part of said heat (14) and at least part of said electricity (12).

11. The installation (10) according to any one of claims 1 to 9, wherein the photovoltaic unit (36) comprises bifacial photovoltaic modules.

12. The installation (10) according to any one of claims 1 to 11, wherein the solar thermal unit (38) comprises parabolic troughs collectors, flat panel collectors, evacuated tube collectors, high-vacuum flat panel collectors, and/or linear Fresnel collectors, and/or a solar tower collection system.

13. A process for producing electricity (12) and heat (14), comprising the following steps:
- providing an installation (10) according to any one of claims 1 to 12,
- switching the installation (10) at least between a first, a second and a third operational modes,
- in the first operation mode, using the gas turbine unit (34) in order to produce said electricity (12) and said heat (14),
- in the second operation mode, using the gas turbine unit (34) in order to produce only part of said electricity (12) and using the photovoltaic unit (36) in order to produce a rest (68) of said electricity (12), and using the gas turbine unit (34) in order to produce at least part of said heat (14) and using the solar thermal unit (38) to produce a rest (68) of said heat (14) and/or in order to provide heat (70) to the gas turbine unit (34), and
- in the third operation mode, producing said electricity (12) and said heat (14) using the photovoltaic unit (36) and the solar thermal unit (38), or using the photovoltaic unit (36), the solar thermal unit (38) and one or several steam turbines (48) of the gas turbine unit (34).

## Patentansprüche

1. Eine Anlage (10) zum Erzeugen von Elektrizität (12) und Wärme (14), wobei die Anlage (10) eine Gasturbineneinheit (34), eine Photovoltaikeinheit (36) und eine Solarthermieeinheit (38) umfasst, wobei die Anlage (10) so konfiguriert ist, dass sie zumindest zwischen folgendem umschaltet:
- einem ersten Betriebsmodus, in dem die Gasturbineneinheit (34) die Elektrizität (12) und die Wärme (14) erzeugt,
- einem zweiten Betriebsmodus, in dem die Gasturbineneinheit (34) nur einen Teil der Elektrizität (12) und die Photovoltaikeinheit (36) einen Rest (68) der Elektrizität (12) erzeugt und in dem die Gasturbineneinheit (34) zumindest einen Teil der Wärme (14) erzeugt und die Solarthermieeinheit (38) entweder einen Rest (68) der Wärme (14) erzeugt oder Wärme (70) an die Gasturbineneinheit (34) liefert, und
- einem dritten Betriebsmodus, in dem die Elektrizität (12) und die Wärme (14) durch die Photovoltaikeinheit (36) und die Solarthermieeinheit (38) oder durch die Photovoltaikeinheit (36), die Solarthermieeinheit (38) und eine oder mehrere Dampfturbinen (48) der Gasturbineneinheit (34) erzeugt werden.

2. Anlage (10) nach Anspruch 1, die ferner eine Wärmespeichereinheit (40) umfasst, die so beschaffen ist, dass sie selektiv Wärme (14) von der Gasturbineneinheit (34) erhält oder Wärme (14) an diese abgibt und dass sie selektiv Wärme (14) von der Solarthermieeinheit (38) erhält und Wärme (14) an diese abgibt.

3. Die Anlage (10) nach Anspruch 1 oder 2 umfasst ferner eine Elektrizitätspeichereinheit (42), die zur selektiven Speicherung von Elektrizität (12) aus der Gasturbineneinheit (34) und der Photovoltaikeinheit geeignet ist.

4. Anlage (10) nach einem der Ansprüche 1 bis 3, wobei die Gasturbineneinheit (34) Folgendes umfasst:
- eine Gasturbine (44) zum Erzeugen eines ersten Teils (56) der Elektrizität (12) in dem ersten Betriebsmodus oder eines ersten Teils (56) des Teils der Elektrizität (12) in dem zweiten Betriebsmodus; und von Abgasen (58);
- einen Wärmerückgewinnungsdampferzeuger (46), der geeignet ist, die Abgase (58) zu empfangen und Dampf (60) zu erzeugen; und
- eine oder mehrere Dampfturbinen (48), die geeignet sind, zumindest den von dem Wärmerückgewinnungsdampferzeuger (46) erzeugten Dampf (60) zu empfangen und einen zweiten Teil (62) der Elektrizität (12) und die Wärme (14) in dem ersten Betriebsmodus zu erzeugen; oder einen zweiten Teil (62) des Teils der Elektrizität (12) und zumindest einen Teil der Wärme (14) in dem zweiten Betriebsmodus zu erzeugen.

5. Anlage (10) nach Anspruch 4, wobei in dem zweiten Betriebsmodus:
- die Wärme (70), die der Gasturbineneinheit (34) von der Solarthermieeinheit (38) zugeführt wird, Dampf umfasst, der von der oder den Dampfturbinen (48) aufgenommen wird, oder
- der Rest (68), der von der Solarthermieeinheit (38) erzeugt wird, Dampf umfasst.

6. Anlage (10) nach Anspruch 4 oder 5, wobei die Gasturbineneinheit (34) ferner Folgendes umfasst:
- einen Kessel (50), der geeignet ist, zusätzlichen Dampf (64) zu erzeugen, wobei die eine oder mehrere Dampfturbinen (48) geeignet sind, den zusätzlichen Dampf (64) aufzunehmen, und/oder
- ein Nachbrennsystem (52) innerhalb des Wärmerückgewinnungsdampferzeugers (46), wobei das Nachbrennsystem (52) so ausgelegt ist, dass es die von dem Wärmerückgewinnungsdampferzeuger (46) erzeugte Dampfmenge (60) selektiv erhöht.

7. Anlage (10) nach einem der Ansprüche 4 bis 6, wobei die Gasturbineneinheit (34) ferner ein Umgehungssystem (54) umfasst, das geeignet ist, den von dem Wärmerückgewinnungsdampferzeuger (46) erzeugten Dampf (60) an der einen oder den mehreren Dampfturbinen (48) vorbeizuleiten.

8. Anlage (10) nach einem der Ansprüche 1 bis 7, die ferner einen oder mehrere Wärmeverbraucher (26) umfasst, wie z. B.:
- ein Heizgerät für einen Rohöltank,
- ein Heizgerät für eine Fackeltrommel,
- ein Heizgerät für eine geschlossene und offene Abflusstrommel,
- einen Löschwasser-Speichertank, einen Entmineralisierungswasser-Speichertank, einen Trinkwasser-Speichertank,
- eine Dampfbegleitheizung,
- Heizgeräte für Exportrohöl,
- ein Amin-Regenerator,
- eine LPG-Fraktionierungs- und Kondensatstabilisierungsanlage,
- eine Gastrocknungsanlage,
- eine Aufbereitungsanlage für produziertes Wasser,
- Ein zwischengeschaltetes Heizgerät für die Ölabscheidung und
- ein elektrostatisches Koaleszenzheizgerät zur Öl- und Wasserabscheidung,
wobei der oder die Wärmeverbraucher (14) geeignet sind, zumindest einen Teil der Wärme (14) aufzunehmen.

9. Anlage (10) nach Anspruch 7, ferner umfassend einen oder mehrere Elektrizitätsverbraucher (24), wie z. B.:
- Pumpen,
- Kompressoren,
- Kühl- oder Gefriergeräte,
- Wärmepumpen und
- Beleuchtungskörper,
wobei der oder die Elektrizitätverbraucher (12) geeignet sind, zumindest einen Teil der Elektrizität (12) aufzunehmen.

10. Anlage (10) nach einem der Ansprüche 1 bis 9, umfassend eine Einheit (28) zur Abscheidung, Nutzung und Sequestrierung von Kohlenstoff oder eine Einheit (30) zur gesteigerten Ölgewinnung, wobei die Einheit (28) zur Abscheidung, Nutzung und Sequestrierung von Kohlenstoff oder die Einheit (30) zur gesteigerten Ölgewinnung so ausgelegt ist, dass sie zumindest einen Teil der Wärme (14) und zumindest einen Teil der Elektrizität (12) aufnehmen kann.

11. Anlage (10) nach einem der Ansprüche 1 bis 9, wobei die Photovoltaikeinheit (36) bifaziale Photovoltaikmodule umfasst.

12. Anlage (10) nach einem der Ansprüche 1 bis 11, wobei die Solarthermieeinheit (38) Parabolrinnenkollektoren, Flachkollektoren, Vakuumröhrenkollektoren, Hochvakuum-Flachkollektoren und/oder lineare Fresnel-Kollektoren und/oder ein Solarturmkollektorsystem umfasst.

13. Verfahren zum Erzeugen von Elektrizität (12) und Wärme (14), umfassend die folgenden Schritte:
- Bereitstellen einer Anlage (10) nach einem der Ansprüche 1 bis 12,
- Umschalten der Anlage (10) zumindest zwischen einem ersten, einem zweiten und einem dritten Betriebsmodus,
- in dem ersten Betriebsmodus, Verwenden der Gasturbineneinheit (34) zum Erzeugen der Elektrizität (12) und der Wärme (14),
- in dem zweiten Betriebsmodus, Verwenden der Gasturbineneinheit (34), um nur einen Teil der Elektrizität (12) zu erzeugen, Verwenden der Photovoltaikeinheit (36), um einen Rest (68) der Elektrizität (12) zu erzeugen, Verwenden der Gasturbineneinheit (34), um zumindest einen Teil der Wärme (14) zu erzeugen, und Verwenden der Solarthermieeinheit (38), um einen Rest (68) der Wärme (14) zu erzeugen und/oder um Wärme (70) an die Gasturbineneinheit (34) zu liefern, und,
- in dem dritten Betriebsmodus, Erzeugen der Elektrizität (12) und der Wärme (14) unter Verwendung der Photovoltaikeinheit (36) und der Solarthermieeinheit (38) oder unter Verwendung der Photovoltaikeinheit (36), der Solarthermieeinheit (38) und einer oder mehrerer Dampfturbinen (48) der Gasturbineneinheit (34).

## Revendications

1. Installation (10) pour la production d'électricité (12) et de chaleur (14), l'installation (10) comprenant une unité de turbine à gaz (34), une unité photovoltaïque (36) et une unité solaire thermique (38), l'installation (10) étant configurée pour commuter au moins entre :
- un premier mode de fonctionnement, dans lequel l'unité de turbine à gaz (34) produit ladite électricité (12) et ladite chaleur (14),
- un deuxième mode de fonctionnement, dans lequel la turbine à gaz (34) ne produit qu'une partie de ladite électricité (12) et l'unité photovoltaïque (36) produit le reste (68) de ladite électricité (12), et dans lequel la turbine à gaz (34) produit au moins une partie de ladite chaleur (14) et l'unité solaire thermique (38) soit produit le reste (68) de ladite chaleur (14), soit fournit de la chaleur (70) à la turbine à gaz (34), et
- un troisième mode de fonctionnement, dans lequel ladite électricité (12) et ladite chaleur (14) sont produites par l'unité photovoltaïque (36) et l'unité solaire thermique (38), ou par l'unité photovoltaïque (36), l'unité solaire thermique (38) et une ou plusieurs turbines à vapeur (48) de l'unité de turbine à gaz (34).

2. Installation (10) selon la revendication 1, comprenant en outre une unité de stockage thermique (40) adaptée pour recevoir sélectivement de la chaleur (14) de l'unité de turbine à gaz (34) ou lui fournir de la chaleur (14), et pour recevoir sélectivement la chaleur (14) de l'unité solaire thermique (38) et lui fournir de la chaleur (14).

3. Installation (10) selon la revendication 1 ou 2, comprenant en outre une unité de stockage d'électricité (42) adaptée pour stocker sélectivement l'électricité (12) provenant de la turbine à gaz (34) et de l'unité photovoltaïque.

4. Installation (10) selon l'une quelconque des revendications 1 à 3, dans laquelle l'unité de turbine à gaz (34) comprend :
- une turbine à gaz (44) pour produire : une première partie (56) de ladite électricité (12) dans le premier mode de fonctionnement ou une première partie (56) de ladite partie de ladite électricité (12) dans le second mode de fonctionnement ; et des gaz d'échappement (58) ;
- un générateur de vapeur à récupération de chaleur (46) adapté pour recevoir lesdits gaz d'échappement (58) et produire de la vapeur (60) ; et
- une ou plusieurs turbines à vapeur (48) adaptées pour recevoir au moins ladite vapeur (60) produite par le générateur de vapeur à récupération de chaleur (46), et pour produire : une deuxième partie (62) de ladite électricité (12), et ladite chaleur (14) dans le premier mode de fonctionnement ; ou pour produire une deuxième partie (62) de ladite partie de ladite électricité (12), et au moins une partie de ladite chaleur (14) dans le deuxième mode de fonctionnement.

5. Installation (10) selon la revendication 4, dans laquelle, dans le deuxième mode de fonctionnement :
- ladite chaleur (70) fournie à l'unité de turbine à gaz (34) par l'unité solaire thermique (38) comprend de la vapeur reçue par ladite ou plusieurs turbines à vapeur (48), ou
- ledit reste (68) produit par l'unité solaire thermique (38) comprend de la vapeur.

6. Installation (10) selon la revendication 4 ou 5, dans lequel l'unité de turbine à gaz (34) comprend en outre :
- une chaudière (50) adaptée pour produire de la vapeur supplémentaire (64), lesdites une ou plusieurs turbines à vapeur (48) étant adaptées pour recevoir ladite vapeur supplémentaire (64), et/ou
- un système de postcombustion (52) à l'intérieur du générateur de vapeur à récupération de chaleur (46), le système de postcombustion (52) étant adapté pour augmenter sélectivement la quantité de ladite vapeur (60) produite par le générateur de vapeur à récupération de chaleur (46).

7. Installation (10) selon l'une quelconque des revendications 4 à 6, dans laquelle l'unité de turbine à gaz (34) comprend en outre un système de dérivation (54) adapté pour permettre à ladite vapeur (60) produite par le générateur de vapeur à récupération de chaleur (46) de contourner lesdites une ou plusieurs turbines à vapeur (48).

8. Installation (10) selon l'une quelconque des revendications 1 à 7, comprenant en outre un ou plusieurs utilisateurs de chaleur (26) parmi :
- une unité de chauffage du réservoir de stockage de brut,
- une unité de chauffage des tambours de torche,
- une unité de chauffage des tambours à vidange fermée et à vidange ouverte,
- un réservoir de stockage d'eau d'incendie, un réservoir de stockage d'eau de déminéralisation, un réservoir de stockage d'eau potable,
- une unité de traçage de la vapeur,
- des systèmes de chauffage de pétrole brut d'exportation,
- un régénérateur d'amines,
- une unité de fractionnement du GPL et de stabilisation des condensats,
- une unité de déshydratation des gaz,
- une unité de traitement de l'eau produite,
- une unité de chauffage inter-étages pour la séparation du pétrole, et
- un réchauffeur coalesceur électrostatique pour la séparation du pétrole et de l'eau,
lesdits un ou plusieurs utilisateurs de chaleur (14) sont adaptés pour recevoir au moins une partie de ladite chaleur (14).

9. Installation (10) selon la revendication 7, comprenant en outre un ou plusieurs utilisateurs d'électricité (24) parmi :
- des pompes,
- des compresseurs,
- des unités de réfrigération ou de refroidissement,
- des pompes à chaleur, et
- des éléments d'éclairage,
lesdits un ou plusieurs utilisateurs d'électricité (12) sont adaptés pour recevoir au moins une partie de ladite électricité (12).

10. Installation (10) selon l'une quelconque des revendications 1 à 9, comprenant une unité de capture, d'utilisation et de séquestration du carbone (28), ou une unité de récupération assistée du pétrole (30), ladite unité de capture, d'utilisation et de séquestration du carbone (28) ou unité de récupération assistée du pétrole (30) étant adaptée pour recevoir au moins une partie de ladite chaleur (14) et au moins une partie de ladite électricité (12).

11. Installation (10) selon l'une quelconque des revendications 1 à 9, dans laquelle l'unité photovoltaïque (36) comprend des modules photovoltaïques bifaciaux.

12. Installation (10) selon l'une quelconque des revendications 1 à 11, dans laquelle l'unité solaire thermique (38) comprend des collecteurs cylindriques et paraboliques, des collecteurs plans, des collecteurs à tubes sous vide, des collecteurs plans à vide poussé, et/ou des collecteurs linéaires de Fresnel, et/ou un système de collecte à tour solaire.

13. Procédé de production d'électricité (12) et de chaleur (14), comprenant les étapes suivantes :
- la fourniture d'une installation (10) selon l'une quelconque des revendications 1 à 12,
- la commutation de l'installation (10) au moins entre un premier, un deuxième et un troisième mode de fonctionnement,
- dans le premier mode de fonctionnement, l'utilisation de l'unité de turbine à gaz (34) afin de produire ladite électricité (12) et ladite chaleur (14),
- dans le deuxième mode de fonctionnement, l'utilisation de l'unité de turbine à gaz (34) afin de produire seulement une partie de ladite électricité (12) et l'utilisation de l'unité photovoltaïque (36) afin de produire le reste (68) de ladite électricité (12), et l'utilisation de l'unité de turbine à gaz (34) afin de produire au moins une partie de ladite chaleur (14) et l'utilisation de l'unité solaire thermique (38) afin de produire le reste (68) de ladite chaleur (14) et/ou de fournir de la chaleur (70) à l'unité de turbine à gaz (34), et
- dans le troisième mode de fonctionnement, la production de ladite électricité (12) et de ladite chaleur (14) en utilisant l'unité photovoltaïque (36) et l'unité solaire thermique (38), ou l'utilisation de l'unité photovoltaïque (36), de l'unité solaire thermique (38) et d'une ou plusieurs turbines à vapeur (48) de l'unité de turbine à gaz (34).
